# EUROPEAN PATENT APPLICATION

(11) **EP 4 340 175 A1**
(43) Date of publication of application: **20.03.2024**
(21) Application number: 22199810.7
(22) Date of filing: 05.10.2022
(51) Int. Cl.: H02J 50/00, H02J 50/10, H02J 50/80, H02G 3/08

(54) **RAIL FOR SUSPENDING ELECTRONIC DEVICES AND SYSTEM COMPRISING SUCH A RAIL AND ONE OR MORE ELECTRONIC DEVICES**

(30) Priority: 19.09.2022 US 202263376127 P
(71) Applicant: Thiink, LLC, San Fransisco, CA 94108 (US)
(72) Inventor: Rostedt, Patrik, 245 92 Staffanstorp (SE); Hjelm, Johan, 94108 San Fransisco (US)
(74) Representative: Zacco Sweden AB

(57) **Abstract**

The present invention relates to a rail for suspending electronic devices. The rail comprising magnetic attachment means configured to suspend an electronic device; and a plurality of coils, positioned along the length of the rail, wherein each coil is configured to provide one or more of: inductive transfer of power to an electronic device suspended by the rail, and wireless communication with an electronic device suspended by the rail. A system comprising such a rail and one or more suspended electronic devices is also presented as well as a method for mounting such a rail to structure, such as a wall or a ceiling.

## Description

### Technical field

The present invention relates to the field of electrical power rails. More particularly, to rails configured to suspend one or more electronic devices, such as a light emitting device, a speaker, a temperature sensor, a CO₂ sensor, a humidity sensor, a light sensor, a camera, and/or a mesh network node. The present invention also relates a system comprising such a rail and to a method of mounting such rail.

### Background

Rails for suspending electronic devices are commonly used both in residential building as well as in commercial buildings such as offices and stores. Existing rails often provides a fixation that is cumbersome to use. For example, most often two hands operation is needed in order to attach or move a device to be suspended by the rail is needed. Hence, a more user-friendly rail is in demand. Further, rails of today are space-consuming and may even give anon-esthetic impression. Hence, a more compact and nice-looking solution for suspending electronic devices as sought for.

### Summary of the invention

It is an object to mitigate, alleviate or eliminate one or more of the above-identified deficiencies in the art and disadvantages singly or in any combination and provide a possibility to solve one or more of the above-mentioned problems.

According to a first aspect a rail for suspending electronic devices is provided. the rail comprising magnetic attachment means configured to suspend an electronic device; and a plurality of coils, positioned along a length of the rail. Each coil being configured to provide: inductive transfer of power to an electronic device suspended by the rail, and wireless communication with an electronic device suspended by the rail.

Hence, a rail for suspending electronic devices is provided. The electronic devices can get power from the rail and be controlled from the rail. Due to the magnetic attachment means flexibility on the devices location on rail is enabled at the same time as alignment between the suspended electronic devices and the coils are provided. The magnetic attachment means further simplify fixation of an electronic device to be suspended by the rail, using magnetic attachment means provide for a simple installation of the electronic device, even one-hand operation is made possible. Hence, a user can add or remove electronic devices to the rail at any time depending on the need. Inductive transfer of energy from the rail to electronic devices suspended thereby is provided. Hence, transfer of energy is made wirelessly, giving the possibility to conceal the rail behind a thin non-conductive screen, such as a wallpaper or any other thin foil screen. Further, multiple coils can be used for power-hungry electronic devices, i.e., one electronic device may be powered via multiple coils with multiple pick-up coils in the electronic device. Different electronic devices can be suspended by the rail without any specific order or numbers and mixed freely on the rail. Depending on the device characteristic, different usage of power and communication is possible independent of the other electronic devices suspended by the rail. Further, the rail provides the possibility to be concealed behind a thin layer such as a wallpaper or any other thin foil screen. Such a layer may hence hide unused parts of the rail. Such a rail blends better in into the surrounding design.

The magnetic attachment means may comprise a plurality of magnetic attachment points. A subset of the plurality of magnetic attachment points may be configured to suspend a single one of the one or more electronic devices.

The rail may further comprise a plurality of light indicators. Each light indicator may be arranged in connection with a respective one of the plurality of coils. Such light indicators simplify the localization of the rail when mounting the electronic device, especially if the rail is concealed behind a thin layer.

The rail may further comprise a light controller configured to set the plurality of light indicators in an on or off mode. The light controller may be configured to individually set the plurality of light indicators in an on or off mode.

The rail may comprise a flat outer surface to which the electronic devices are suspendable via the magnetic attachment means. By forming the rail to have a flat outer surface the rail may be arranged in a recess of a structure, such as a ceiling or wall, and hidden by a layer, such as a wallpaper or any other thin foil screen. The layer preferably being a non-conductive thin layer.

The rail may further comprise a rail controller configured to individually control the electronic devices suspended by the rail. The rail controller may further be configured to wirelessly communicate with one or more devices not suspended by the rail. Hence, the rail may be able to act as single device towards a client or server. The rail controller can be set to present an interface towards a device external from the rail, such as a client or server. The rail controller may be set to relay communication to the electronic devices suspended by the rail. For example, in case the rail is suspending a number of light emitting devices, each light emitting device can be individually controlled via rail controller.

The rail may further comprise a coil controller configured to individually control the plurality of coils.

The rail may further comprise a connection interface configured to connect the rail to mains power and/or to another rail.

According to a second aspect system comprising a rail according to the first aspect and one or more electronic devices suspended thereby is provided.

The electronic devices may be selected from the group consisting of a light emitting device, a speaker, a temperature sensor, a CO₂ sensor, a humidity sensor, a light sensor, a camera, and a mesh network node.

At least a subset of the electronic devices may comprise a built-in battery configured to at least intermittently power the electronic device. By arranging an electronic device to have its own battery inside peak current handling that exceeds the coil current transfer limitation is provided for. Moreover, rearrangement of the electronic device on the rail without loss off functions or communication is provided for. The electronic device may also use the rail as a charger for its built-in battery to be able to function without applied power from the rail.

At least a subset of the electronic devices comprises a built-in short range wireless communication module configured to communicate with a device external from the system.

The system may further comprise a plurality of rails according to the first aspect connected to each other.

The above-mentioned features of the rail, when applicable, apply to this second aspect as well. In order to avoid undue repetition, reference is made to the above.

According to a third aspect a method of mounting a rail according to the first aspect is provided. The method comprising: arranging the rail in a recess in a structure, such as a wall or a ceiling; and covering the rail with a layer, such as a wallpaper or any other thin foil screen. The layer preferably being a non-conductive thin layer.

The above-mentioned features of the rail and/or system, when applicable, apply to this third aspect as well. In order to avoid undue repetition, reference is made to the above.

A further scope of applicability will become apparent from the detailed description given below. However, it should be understood that the detailed description and specific examples are given by way of illustration only.

It is to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The above and other aspects will now be described in more detail, with reference to appended figures. The figures should not be considered limiting; instead, they are used for explaining and understanding.

As illustrated in the figures, the sizes of layers and regions may be exaggerated for illustrative purposes and, thus, are provided to illustrate the general structures. Like reference numerals refer to like elements throughout.
Fig. 1 illustrate a system comprising a rail for suspending electronic devices and a plurality of electronic devices suspended by the rail.
Fig. 2 illustrate the rail of Fig. 1 in more detail.
Fig. 3 is a block diagram of a method for mounting a rail illustrated in connection with Fig. 1 to a structure.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

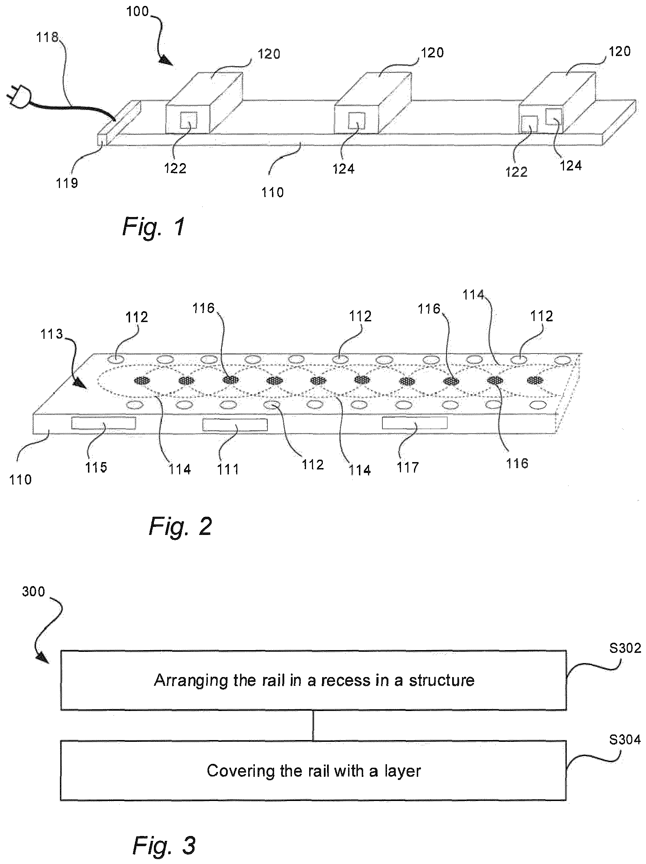

Fig. 1 illustrates a system 100 comprising a rail 110 for suspending electronic devices 120 and a plurality of electronic devices 120 suspended by the rail 110. The electronic devices 120 may be various electronic devices 120. Typically, the electronic devices 120 are selected from the group consisting of a light emitting device, a speaker, a temperature sensor, a CO₂ sensor, a humidity sensor, a light sensor, a camera, and a mesh network node. Among many functions, the rail 110 is typically configured to power the one or more electronic devices 120 suspended thereby.

At least one of the electronic devices 120 may comprise a built-in battery 122. The built-in battery 122 is configured to at least intermittently power the electronic device 120. By having such built-in battery 122, peak current limitations that exceed inductive power transfer that the rail 110 can provide may be handled. Also, the device can be moved in relation to the rail 110 without loss of function and/or communication.

At least one of the electronic devices may comprise a built-in short-range wireless communication module 124. The short-range wireless communication module 124 is configured to communicate with a device external from the system 100. The short-range wireless communication module 124 may be configured to communicate using any suitable communication protocol. Some non-limiting examples of such communication protocols are Wi-Fi, BLE, and Zigbee. It is however realized than any short-range communication protocol, having a range within 1 to 100 meters, may be used.

The rail 110 may comprise an external power supply 118. The external power supply 118 may be connected to a connection interface 119 of the rail 110. More specifically to an input AC or DC power connection of the connection interface 119 of the rail 110. The external power supply 118 is configured to supply the rail 110 with power. For example, the external power supply 118 may be an ordinary electrical plug connectable to an electrical power socket. Hence, the connection interface 119 of the rail 110 may be configured to connect the rail 110 to mains power.

The connection interface 119 may also act as a connection interface to another rail 110. Using connection interface 119 as a connection interface to another rail 110 both power and communication between the rails 110 may be provided through the connection interface 119. Communication between the rails 110 may, e.g., be made using Single Pair ethernet. Connection interfaces 119 of two different rails 110 may be connected to each other by an adapter or a cable. Multiple rails 110 can be connected in series in parallel or in star configuration.

In connection with fig. 2 the rail 110 will be discussed in more detail. The rail 110 comprises a plurality of magnetic attachment means 112 and a plurality of coils 114.

The rail 110 is preferably having a flat outer surface 113. By the rail 110 having a flat outer surface 113, the rail 100 may be concealed behind a non-conductive thin layer, such as a wallpaper or any other thin foil screen.

The plurality of magnetic attachment means 112 are positioned along the length of the rail 110. The magnetic attachment means 112 are configured to suspend one or more electronic devices 120. The magnetic attachment means 112 may comprise magnetic attachment points. A subset of the plurality of magnetic attachment points may be configured to suspend a single one of the one or more electronic devices 120. By using defined connection points, e.g., in the form of point magnets, the suspended electronic device can be aligned with a coil 114. Typically, two or more magnetic attachment points are used for suspending a single electronic device 120. For example, three magnetic attachment points may be used, two on one side of the rail 110 and one on the opposite side of the rail 110 indicating a non-symmetric magnetic attachment means 112 indicating a preferred orientation of suspending an electronic device 120.

The plurality of coils 114 are positioned along the length of the rail 110. The coils 114 may partially overlap for a higher density of possible attachment points for the electronic devices 120 to be suspended. Each coil 114 is configured to provide one or more of: inductive transfer of power to an electronic device 120 suspended by the rail 110, and wireless communication with an electronic device 120 suspended by the rail 110. The wireless communication via the coils 114 may by either proprietary or standardized, such as QI, inductive communication. Through the inductive communication via the coils 114 the suspended electronic devices 120 may be individually controlled. Further, the through the inductive communication via the coils 114 suspended electronic devices 120 may be identified using the inductive communication. For example, the type of suspended electronic device 120 may be identified. Moreover, a location on the rail 110 of a suspended electronic device 120 may be identified. The inductive communication via the coils 114 may further be used for configuring and/or controlling each suspended electronic device 120.

Preferably, the rail 110 comprises a coil controller 115. The coil controller 115 is configured to control the coils 114. Preferably, the coil controller 115 is configured to control the coils 114 individually. The coil controller 115 may be configured to power the coils 114 for providing inductive transfer of power to an electronic device 120 suspended by the rail 110. The coil controller 115 may be configured to safeguard so that coils 114 presently not being set to service a suspended electronic device 120 with power is unpowered. The coil controller 115 may be configured to monitor/measure power consumption of an electronic device 120 being suspended by the rail 110. The coil controller 115 may be configured to control wireless communication with an electronic device 120 suspended by the rail 110.

The rail 110 may further comprise a plurality of light indicators 116. Each light indicator 116 is arranged in connection with a respective one of the plurality of coils 114. The light indicators 116 provide guidance for finding a magnetic attachment means 112 for an electronic device to be suspended by the rail 110. This is especially true in case the rail 110 is concealed behind a non-conductive thin layer of, e.g., wallpaper or any other thin foil screen. Typically, the rail 110 also comprises a light controller 117 configured to control the light indicators 116. The light controller 117 may set a light indicator 116 in an on mode or in an off mode. Typically, the light controller 117 is configured to control the light indicators 116 individually. Hence, a guide for where to suspend a particular one of the one or more electronic devices 120 may be given. The light indicator 116 may further be used for status indication.

The rail 110 may further comprise a rail controller 111. Each electronic device 120 may be configured to identify itself and the rail controller 111 may therefore identify the electronic device 120 and its location on the rail 110. The rail controller 111 may be configured to keep record of each electronic device suspended by the rail. That is, the rail controller 111 may keep record on which electronic devices 120 are suspended by the rail 110 and what functionality the different electronic devices 120 may provide. Moreover, the rail controller 111 may monitor a status of each electronic device 120 suspended by the rail 110. The rail controller 111 may further be configured to individually control electronic devices 120 suspended by the rail 110. Such controlling of the electronic devices 120 suspended by the rail 110 is preferably made via inductive communication. That is, via communication controlled by the coil controller 115. Hence, each electronic device 120 can be identified and located on the rail 110. The rail controller 111 will keep track of each electronic device 120 suspended thereby. Further, the rail controller 111 may communicate to devices external from the rail 110 which electronic device 120 are available and how they can be controlled.

The rail controller 111 may further be configured to wirelessly communicate with one or more devices not suspended by the rail 120. The one or more devices not suspended by the rail 110 may, e.g., be a client (such as a mobile device configured to control the one or more electronic devices 120 suspended by the rail 110), a server (such as home automation server configured to control the one or more electronic devices 120 suspended by the rail 110), or another rail 110 in a system of rails. Hence, the rail 110 may then act as a "single" device connected to a control device, e.g., the client or the server. This allows for simplified communication/connection between the control device and the electronic devices 120. Further, congestion in communication between the control device and the electronic devices 120 may be avoided.

The rail controller 111 may further be configured to monitor energy consumption of each electronic device 120 suspended by the rail 110. Further, the rail controller 111 may monitor a total energy consumption of the rail 110 and all electronic device 120 suspended thereby.

One or more of the rail controller 111, the coil controller 115 and the light controller 117 may be implemented as a hardware module a software module or a combination thereof. The rail controller 111, the coil controller 115 and/or the light controller 117 of the rail 110 may be integrated as a common controller.

Hence, the system 110 presented herein provided for that each electronic device 120 suspended by the rail 110 can operate in either individual mode or through communicating through the rail 110. Depending on the type of electronic device 120 and capabilities thereof, the electronic device 120 can offer communication over Wi-Fi, BLE, Zigbee or other radio network. In case the suspended electronic device 120 is device in need of a lot of network bandwidth, such as a camera or speaker, the major communication is set to be over Wi-Fi, BLE, Zigbee or other radio network. However, such an electronic device 120 can still utilize the communication via the rail 110 for other purposes, such as controlling its volume, identify neighboring electronic devices, etc.

All electronic devices 120 on the rail 110 can utilize the communication via the rail 110, through the inductive coils 114. Typical communication via the rail 110 is used to identify the location of the electronic device 120, communicate small amount of data, e.g., exposed function and controls, control data to turn the electronic device 120 on/off light, set a volume etc.

The rail controller 111 is configured to translate inductive communication to an internal multi-drop bus, e.g., Single-pair ethernet, hereby named rail-bus. On the rail bus, one or more nodes can transfer the communication to any standard communication, such as Wifi, Ethernet, BLE etc. This way, the rail 110 can act as a single node on a communication network, enabling access to all electronic devices 120 suspended by the rail 110. This simplifies the setup and communication with an external control device, e.g., in the form of a control client (such as a smart phone or the like) or control server (such as a smart home central or the like).

Through the information kept on record by the rail controller 111, such as device id, location etc., setup of the rail 110 can be exposed externally of the rail 110, to, e.g., simplify control, setup and maintenance.

In connection with Fig. 3 a method for mounting a rail 110 as discussed above in a structure, such as a wall or a ceiling will be discussed. The method comprises arranging S302 the rail 110 in a recess in the structure; and covering S304 the rail 110 with a layer, such as a wallpaper or any other thin foil screen. The layer preferably being a non-conductive thin layer.

The person skilled in the art realizes that the present invention by no means is limited to what is explicitly described above. On the contrary, many modifications and variations are possible within the scope of the appended claims.

For example, the system 100 may comprise a plurality of rails 110. The rails 110 may be connected to each other in various layouts. The rails 110 may be interconnected via a connection interface 119 of the respective rail 110. Hence, a specific rail 110 may be connected to another rail 110. According to non-limiting examples, the rails 110 may be connected to in series, in parallel or in star topology. Upon the system comprising a plurality of rails 110, at least one of the rails 110 comprises an external power supply 118 connecting the system 100 of rails 110 to an external power supply, e.g., via an ordinary electrical plug connectable to an electrical power socket. Further, in case the system 100 comprises a plurality of rails 110, a rail controller 111 of a single one of the rails 110 may be used as a main controller communicating with devices external from the system 100. In such case, the rail bus may be extended seamlessly.

Moreover, if electronic devices 120 have their own means of communication with low bandwidth requirements, the device can select to turn them off if connected through the rail 110, in order to make setup and communication easier, and not to clutter up the radio space.

Additionally, variations can be understood and effected by the skilled person in practicing the claimed invention, from a study of the drawings, the disclosure, and the appended claims.

## Claims

1. A rail for suspending electronic devices (120), the rail comprising:
magnetic attachment means (112) configured to suspend an electronic device (120); and
a plurality of coils (114), positioned along a length of the rail, wherein each coil (114) is configured to provide:
inductive transfer of power to an electronic device (120) suspended by the rail, and
wireless communication with an electronic device (120) suspended by the rail.

2. The rail according to claim 1, wherein the magnetic attachment means (112) comprises a plurality of magnetic attachment points, wherein a subset of the plurality of magnetic attachment points is configured to suspend a single one of the one or more electronic devices (120).

3. The rail according to claim 1 or 2, further comprising a plurality of light indicators (116), wherein each light indicator (116) is arranged in connection with a respective one of the plurality of coils (114).

4. The rail according to claim 3, further comprising a light controller (117) configured to set the plurality of light indicators (116) in an on or off mode.

5. The rail according to any one of claims 1-4, having a flat outer surface (113) to which the electronic devices (120) are suspendable via the magnetic attachment means (112).

6. The rail according to any one of claims 1-5, further comprising a rail controller (111) configured to individually control the electronic devices suspended by the rail.

7. The rail according to claim 6, wherein the rail controller (111) is further configured to wirelessly communicate with one or more devices not suspended by the rail.

8. The rail according to any one of claims 1-7, further comprising a coil controller (115) configured to individually control the plurality of coils.

9. The rail according to any one of claims 1-8, further comprising a connection interface (119) configured to connect the rail to mains power and/or to another rail.

10. A system comprising a rail (110) according to any one of claims 1-9 and one or more electronic devices (120) suspended thereby.

11. The system according to claim 10, wherein the electronic devices (120) are selected from the group consisting of a light emitting device, a speaker, a temperature sensor, a CO₂ sensor, a humidity sensor, a light sensor, a camera, and a mesh network node.

12. The system according to claim 10 or 11, wherein at least a subset of the electronic devices (120) comprises a built-in battery (122) configured to at least intermittently power the electronic device (120).

13. The system according to any one of claims 10-12, wherein at least a subset of the electronic devices (120) comprises a built-in short range wireless communication module (124) configured to communicate with a device external from the system.

14. The system according to any one of claims 10-13, comprising a plurality of rails (110) according to any one of claims 1-9 connected to each other.

15. A method of mounting a rail (110) according to any one of claim 1-9, the method comprising:
arranging the rail (110) in a recess in a structure, such as a wall or a ceiling;
covering the rail (110) with a layer, such as a wallpaper or screen.

## Amended claims

### Amended claims in accordance with Rule 137(2) EPC.

1. A rail for suspending electronic devices (120), the rail comprising:
a plurality of magnetic attachment means (112) positioned along a length of the rail, wherein the magnetic attachment means (112) is configured to suspend an electronic device (120); and
a plurality of coils (114), positioned along a length of the rail, wherein each coil (114) is configured to provide:
inductive transfer of power to an electronic device (120) suspended by the rail, and
wireless communication with an electronic device (120) suspended by the rail,
**characterized in that** the magnetic attachment means (112) comprises a plurality of magnetic attachment points, wherein the magnetic attachment points are located on a distance from a center of a respective coil (114).

2. The rail according to claim 1, wherein the magnetic attachment means (112) comprises three magnetic attachment points, two on one side of the rail (110) and one on the opposite side of the rail (110) indicating a nonsymmetric magnetic attachment means (112) indicating a preferred orientation of suspending an electronic device (120).

3. The rail according to claim 1 or 2, further comprising a plurality of light indicators (116), wherein each light indicator (116) is arranged in connection with a respective one of the plurality of coils (114).

4. The rail according to claim 3, further comprising a light controller (117) configured to set the plurality of light indicators (116) in an on or off mode.

5. The rail according to any one of claims 1-4, having a flat outer surface (113) to which the electronic devices (120) are suspendable via the magnetic attachment means (112).

6. The rail according to any one of claims 1-5, further comprising a rail controller (111) configured to individually control the electronic devices suspended by the rail.

7. The rail according to claim 6, wherein the rail controller (111) is further configured to wirelessly communicate with one or more devices not suspended by the rail.

8. The rail according to any one of claims 1-7, further comprising a coil controller (115) configured to individually control the plurality of coils.

9. The rail according to any one of claims 1-8, further comprising a connection interface (119) configured to connect the rail to mains power and/or to another rail.

10. A system comprising a rail (110) according to any one of claims 1-9 and one or more electronic devices (120) suspended thereby.

11. The system according to claim 10, wherein the electronic devices (120) are selected from the group consisting of a light emitting device, a speaker, a temperature sensor, a CO₂ sensor, a humidity sensor, a light sensor, a camera, and a mesh network node.

12. The system according to claim 10 or 11, wherein at least a subset of the electronic devices (120) comprises a built-in battery (122) configured to at least intermittently power the electronic device (120).

13. The system according to any one of claims 10-12, wherein at least a subset of the electronic devices (120) comprises a built-in short range wireless communication module (124) configured to communicate with a device external from the system.

14. The system according to any one of claims 10-13, comprising a plurality of rails (110) according to any one of claims 1-9 connected to each other.
